# FASCICULE DE BREVET EUROPEEN

(11) **EP 3 304 682 B1**
(45) Date de publication et mention de la délivrance du brevet: **29.01.2020**
(21) Numéro de dépôt: 16734417.5
(22) Date de dépôt: 31.05.2016
(51) Int. Cl.: H02J 7/14, B60L 15/20, B60L 3/00, B60L 3/04, B60L 50/16, B60L 58/12

(54) **PROCÉDÉ DE CONTRÔLE D'UN ENSEMBLE BATTERIE ET ALTERNATEUR POUR UN MOTEUR DE VÉHICULE AUTOMOBILE**
VERFAHREN ZUR STEUERUNG EINER GRUPPE BESTEHEND AUS EINER BATTERIE UND EINEM WECHSELSTROMGENERATOR IN EINEM KRAFTFAHRZEUG
METHOD FOR CONTROLLING A BATTERY/ALTERNATOR ASSEMBLY WITHIN A MOTOR VEHICLE

(30) Priorité: 01.06.2015 FR 1554969
(43) Date de publication de la demande: 11.04.2018
(73) Titulaire: Peugeot Motocycles SA, 25350 Mandeure (FR)
(72) Inventeur: WEI, England, 25200 Montbeliard (FR); DU GARDIN, Alexis, 90300 Valdoie (FR); DROUOT, Stephane, 25550 Bavans (FR)
(74) Mandataire: Ménès, Catherine
(86) Numéro de dépôt international: PCT/FR2016/051294
(87) Numéro de publication internationale: WO 2016/193610

(56) Documents cités:
- EP-A2- 2 651 007
- FR-A1- 2 805 681
- US-A- 5 080 059

## Description

La présente invention concerne un procédé de contrôle d'un ensemble comprenant une batterie, un alternateur et leurs connexions électriques pour un moteur de véhicule automobile, le véhicule automobile étant un engin deux roues, notamment un engin deux roues plus connu sous l'appellation de scooter. La présente invention concerne aussi un tel ensemble d'une batterie, d'un alternateur et de leurs connexions électriques, avec possibilité d'interruption par un relais de la connexion électrique entre l'alternateur et la batterie.

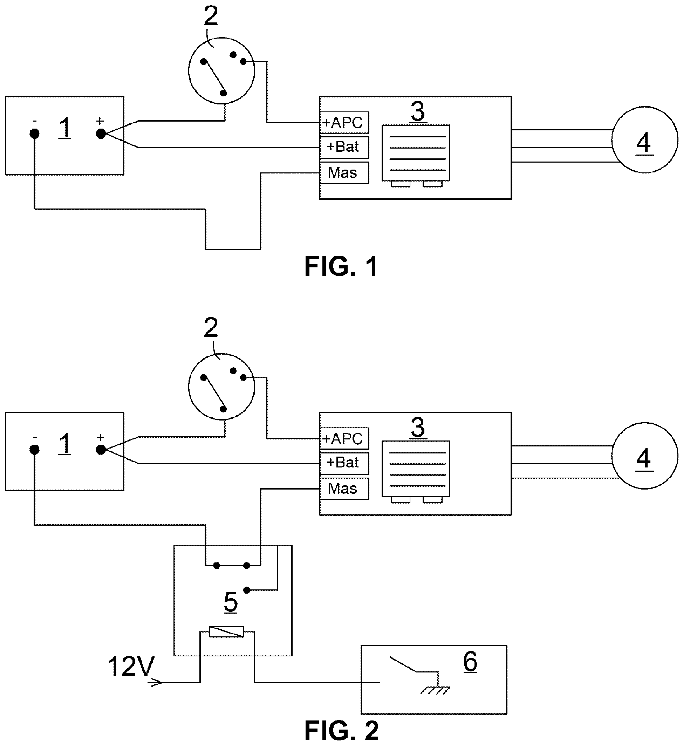

La figure 1 montre un diagramme schématique d'un ensemble comprenant une batterie 1, un alternateur 4 et leurs connexions électriques, cet ensemble étant connu de l'état de la technique. La batterie 1 d'un tel ensemble sert à l'alimentation électrique de nombreux éléments embarqués dans le véhicule, comme par exemple un démarreur, une unité de contrôle moteur, aussi connu sous l'abréviation UCE, commandant un ou des éléments, notamment une série d'actionneurs pour le fonctionnement optimal du moteur du véhicule et pour le fonctionnement ou le chauffage d'autres éléments présents dans le véhicule, par exemple des sondes. Cette batterie 1 est rechargée lors du fonctionnement du véhicule ceci par un alternateur 4.

Un alternateur 4, aussi connu sous l'abréviation de générateur de courant alternatif GCA et sous l'abréviation anglaise de ACG pour « alternating current generator », prélève une énergie mécanique lors de la rotation du moteur en la transformant en une énergie électrique alimentant un régulateur 3 de courant disposé entre la batterie 1 et l'alternateur 4. Le régulateur 3 a pour fonction de redresser le courant alternatif en provenance de l'alternateur 4 en courant continu et de réguler la tension de sortie pour l'adapter à la tension de la batterie 1 ainsi qu'au réseau de bord électrique embarqué.

De manière classique, l'alternateur 4 comprend un volant magnétique directement monté sur l'arbre de sortie du moteur, un volant magnétique n'étant pas montré aux figures. Pour un moteur thermique, le volant magnétique est directement monté sur le vilebrequin du moteur.

La batterie 1 comporte deux bornes, l'une positive et l'autre négative. Le régulateur 3 de courant est disposé entre la batterie 1 et l'alternateur 4 en présentant, d'un côté, une première connexion électrique reliée à la borne positive et une deuxième connexion électrique reliée à la borne négative de la batterie 1. De l'autre côté, le régulateur 3 présente des connexions électriques avec l'alternateur 4.

Dans cet état de la technique, l'alternateur 4, possédant ou non un volant magnétique, et la batterie 1 sont câblés via le régulateur 3 de façon permanente. Il s'ensuit que le flux électrique entre alternateur 4 et batterie 1 n'est jamais interrompu, même s'il n'est pas toujours nécessaire. Il en résulte une surconsommation et en conséquence une surpollution qui auraient pu être évitées.

Enfin et surtout, il en résulte une indisponibilité de transmission de la totalité du couple moteur qui aurait pu être délivrée à la roue motrice, dans le cas d'un engin deux roues, ou aux roues motrices, dans le cas d'un véhicule à quatre roues, étant donné que l'alternateur 4 prélève constamment une partie de l'énergie mécanique du moteur pour la transformer en énergie électrique.

Le document JP-A-2014/054965 décrit un ensemble d'une batterie connectée par un régulateur à un alternateur. Ce document décrit qu'il est possible d'interrompre la connexion entre alternateur et batterie par une opération sur la consigne de tension du régulateur par une boucle de rétroaction. Ce système est cependant compliqué. De plus il n'y a aucune indication dans ce document sur la stratégie de pilotage de la consigne de tension et dans quel but cette stratégie est mise en œuvre.

Les documents EP2 651 007 A2 et US 5 080 059 A décrivent également des systèmes d'alimentation électrique pour véhicule automobile.

Le problème à la base de la présente invention est de proposer une alternative à une connexion permanente de la batterie à l'alternateur lors des fonctionnements du moteur d'un véhicule pour lesquelles cette connexion permanente est superflue voire préjudiciable au rendement optimal du moteur, ceci par un système de déconnexion qui soit simple de mise en oeuvre tout en étant réactif.

Pour atteindre cet objectif, il est prévu selon l'invention un procédé de contrôle d'un ensemble d'une batterie, d'un alternateur et de leurs connexions électriques pour un moteur de véhicule automobile de type scooter, la batterie comportant deux bornes, l'une positive et l'autre négative, et l'alternateur prélevant une énergie mécanique lors de la rotation du moteur en la transformant en une énergie électrique alimentant un régulateur de courant disposé entre la batterie et l'alternateur en présentant, d'un côté, une première et une deuxième connexions électriques respectivement à la borne positive et à la borne négative de la batterie et, de l'autre côté, des connexions électriques avec l'alternateur, la batterie présentant un niveau de charge et étant rechargée électriquement par l'alternateur via le régulateur, caractérisé en ce que la deuxième connexion électrique entre la borne négative de la batterie et le régulateur est interrompue lors d'une demande effective de couple moteur au-dessus d'une valeur prédéterminée de couple sous première condition que la tension alors effective de la batterie soit supérieure à une tension minimale prédéterminée, la deuxième connexion électrique étant rétablie pour une demande de couple moteur en dessous de la valeur prédéterminée.

L'effet technique est d'obtenir une augmentation du couple moteur en ajustant le couple prélevé par l'alternateur, le cas échéant par l'intermédiaire du volant magnétique, en fonction de différentes phases de vie du véhicule. La réduction ou l'annulation du couple prélevé par l'alternateur permet améliorer les performances du moteur et de diminuer la consommation de carburant.

Par exemple, sur les fortes charges, afin d'optimiser les performances moteur, le procédé va désaccoupler l'alternateur et la batterie et a contrario lors des décélérations afin de récupérer de l'énergie gratuite lors du freinage. Selon le procédé, il est possible de reconnecter la charge de la batterie afin de profiter de l'énergie gratuite lors du freinage. De même, lors du démarrage moteur, le procédé comporte la désactivation de la connexion entre alternateur et batterie, afin de limiter le couple nécessaire au démarrage.

La tension minimale prédéterminée peut être la tension minimale au-dessous de laquelle il est estimé que la batterie ne peut pas remplir correctement sa fonction et qu'il y a un risque de mauvais fonctionnement ou de fonctionnement insuffisant de la batterie pour l'alimentation électrique d'éléments embarqués dans le véhicule.

Avantageusement, quand le moteur est un moteur électrique, la demande effective de couple moteur et la valeur prédéterminée de couple sont calculées en fonction du régime moteur et de l'intensité du courant d'alimentation du moteur respectivement en vigueur pour cette demande ou valeur ou quand le moteur est un moteur thermique avec au moins une chambre de combustion, le moteur présentant à son entrée une vanne papillon permettant de réguler le flux d'air admis et un injecteur régulant le carburant injecté pour le mélange air carburant dans ladite au moins une chambre de combustion, la demande effective de couple moteur et la valeur prédéterminée de couple sont calculées en fonction du régime moteur et de l'ouverture de la vanne papillon et de l'injection de carburant respectivement en vigueur pour cette demande ou valeur.

Avantageusement, une deuxième condition pour l'interruption de la deuxième connexion électrique entre la borne négative de la batterie et le régulateur est que le kilométrage parcouru par le véhicule avec la même batterie soit inférieur à une valeur de kilométrage maximal prédéterminée, afin de préserver le système lors du vieillissement de la batterie.

Avantageusement, quand le moteur est un moteur thermique équipé d'un ou d'éléments devant être chauffés par la batterie tant que le moteur n'a pas atteint une température de fonctionnement spécifique pour l'élément ou chacun des éléments, une troisième condition pour l'interruption de la deuxième connexion électrique entre la borne négative de la batterie et le régulateur est que la température du moteur atteigne la température de fonctionnement de l'élément ou la plus haute température de fonctionnement des éléments.

Avantageusement, une quatrième condition pour l'interruption de la deuxième connexion électrique entre la borne négative de la batterie et le régulateur est que le nombre d'interruptions n'ait pas dépassé un nombre d'interruptions maximal, afin de préserver le système lors du vieillissement de la batterie .

Avantageusement, la deuxième connexion électrique entre la borne négative de la batterie et le régulateur est rétablie à une périodicité prédéterminée jusqu'à ce que la tension effective de la batterie atteigne une tension prédéterminée suffisamment haute pour éviter un effet mémoire diminuant la capacité de la batterie, pouvant correspondre sensiblement à la tension à mi-charge de la batterie. La batterie peut alors fonctionner plus longtemps à mi-charge où sa capacité de recharge est meilleure.

Avantageusement, au démarrage du moteur, la deuxième connexion électrique entre la borne négative de la batterie et le régulateur est interrompue jusqu'à ce que le régime moteur atteigne une valeur minimale de régime prédéterminée représentative d'une fin de démarrage, la deuxième connexion électrique étant alors rétablie pour la charge de la batterie. Ceci permet de faciliter le démarrage du moteur en diminuant le couple nécessaire pour assurer son démarrage.

L'invention concerne aussi un ensemble d'une batterie, d'un alternateur et de leurs connexions électriques pour un moteur de véhicule automobile de type scooter, la batterie comportant deux bornes, l'une positive et l'autre négative, et l'alternateur prélevant une énergie mécanique lors de la rotation du moteur en la transformant en une énergie électrique alimentant un régulateur de courant disposé entre la batterie et l'alternateur en présentant, d'un côté, des première et deuxième connexions électriques respectives à la borne positive et à la borne négative de la batterie et, de l'autre côté, des connexions électriques avec l'alternateur, la batterie étant rechargée électriquement par l'alternateur via le régulateur, caractérisé en ce qu'il comprend un relais disposé dans la deuxième connexion électrique de la borne négative de la batterie au régulateur, cette connexion électrique étant interrompue par ouverture du relais et rétablie lors de la fermeture du relais, l'ouverture et la fermeture du relais étant pilotées par un système de commande conformément à un tel procédé de contrôle.

L'ensemble utilise une fonction logicielle hébergée dans le système de commande qui pilote, via une sortie analogique, un relais permettant de commuter, ou non, la charge de la batterie par l'alternateur. Par défaut, le relais, non commandé et donc en position fermée, permet d'assurer la recharge de la batterie, mais dans différentes phases de vie, le système de commande va piloter le relais afin de supprimer le couple prélevé sur le moteur, et ainsi optimiser les performances et les consommations du moteur.

Il est ainsi obtenu une optimisation de la consommation d'énergie du véhicule. En effet, afin d'améliorer la consommation du moteur, sous condition qu'une tension minimale prédéterminée soit maintenue pour la batterie, le système de commande, avantageusement l'unité de commande moteur, va piloter le relais suivant les phases de vie du véhicule diminuant ainsi le couple prélevé sur le moteur. La gestion logicielle du relais agit donc directement sur l'amélioration des performances et de la consommation du moteur, notamment en carburant pour un moteur thermique.

Avantageusement, l'ensemble comporte une troisième connexion électrique reliant la borne positive de la batterie au régulateur en dérivation de la première connexion électrique, la troisième connexion électrique comportant un interrupteur actionnable par une clé de contact du conducteur entre une position d'ouverture et une position de fermeture de la troisième connexion, le régulateur comprenant un élément interrompant la connexion électrique entre la batterie et le régulateur tant que la troisième connexion est ouverte, la fermeture de l'interrupteur par la clé de contact du conducteur permettant la connexion entre la batterie et le régulateur.

Avantageusement, l'alternateur comporte un volant magnétique assurant la conversion d'une énergie mécanique prélevée sur l'énergie mécanique du moteur en énergie électrique.

L'invention concerne aussi un véhicule automobile de type scooter comprenant un moteur et une unité de contrôle moteur commandant un ou des éléments pour le fonctionnement optimal du moteur, caractérisé en ce qu'il comprend un tel ensemble, le système de commande de l'ensemble étant l'unité de contrôle moteur. Ce véhicule automobile est de préférence un engin deux roues, familièrement connu sous l'appellation de scooter.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'un ensemble batterie et alternateur et de leurs connexions électriques selon l'état de la technique, cet ensemble comprenant un régulateur disposé entre la batterie et l'alternateur,
- la figure 2 est une représentation schématique d'un ensemble batterie et alternateur et de leurs connexions électriques selon la présente invention, l'ensemble présentant un relais interrompant la connexion entre la batterie et un régulateur disposé entre la batterie et l'alternateur,
- la figure 3 est une représentation schématique d'un diagramme du procédé de contrôle d'un ensemble d'une batterie, d'un alternateur et de leurs connexions électriques selon la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différents éléments illustrés ne sont pas représentatives de la réalité.

La figure 1 a déjà été détaillée dans la partie introductive de la description de la présente demande.

En se référant à la figure 2, la présente invention concerne un procédé de contrôle d'un ensemble d'une batterie 1, d'un alternateur 4 et de leurs connexions électriques pour un moteur de véhicule automobile, de même qu'un tel ensemble. Le moteur peut être un moteur thermique ou un moteur électrique et même le véhicule peut comprendre plusieurs moteurs, notamment un moteur thermique ou un moteur électrique en étant un véhicule hybride. Le terme véhicule automobile englobe des engins deux roues du type scooter.

De manière classique, la batterie 1 comporte deux bornes, l'une positive et l'autre négative. L'alternateur 4 prélève une énergie mécanique lors de la rotation du moteur en la transformant en une énergie électrique alimentant un régulateur 3 de courant disposé entre la batterie 1 et l'alternateur 4. Le régulateur 3 présente, d'un côté, une première connexion à la borne positive de la batterie et une deuxième connexion électrique à la borne négative de la batterie 1. De l'autre côté, le régulateur 3 présente des connexions électriques avec l'alternateur 4.

La batterie 1 qui présente un niveau de charge pouvant varier en utilisation, cette batterie 1 servant à l'alimentation électrique de divers éléments présents dans le véhicule, est rechargée électriquement par l'alternateur 4 via le régulateur 3.

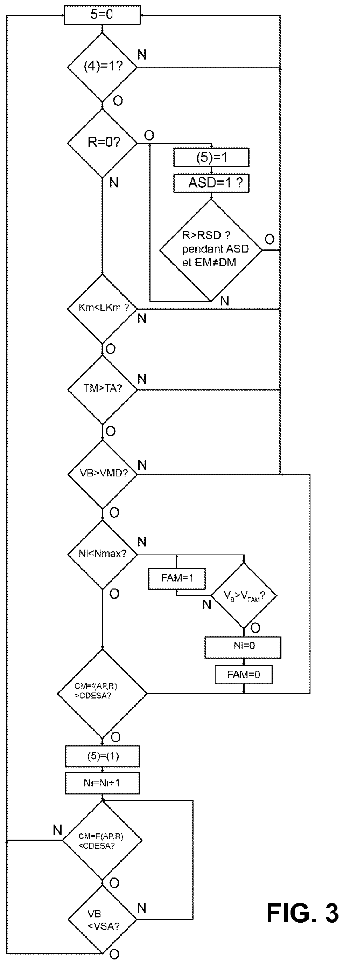

En se référant aux figures 2 et 3, conformément au procédé selon l'invention, la deuxième connexion électrique entre la borne négative de la batterie 1 et le régulateur 3 est interrompue lors d'une demande de couple moteur au-dessus d'une valeur prédéterminée de couple CDESA, sous première condition que la tension VB alors effective de la batterie 1 soit supérieure à une tension minimale prédéterminée VMD, la deuxième connexion électrique étant rétablie pour une demande de couple moteur en dessous de la valeur prédéterminée CDESA.

Les références VB, VMD et CDESA sont visibles à la figure 3 et signifient respectivement la tension de la batterie alors effective, la tension minimale prédéterminée ou tension seuil de désactivation au dessous de laquelle une désactivation de la charge de la batterie n'est pas permise et le couple de désactivation en dessous duquel une désactivation de la charge de la batterie n'est plus souhaitée. La tension minimale prédéterminée VMD peut être aux environs de 12,8Volt pour une batterie de voltage maximal de 24Volt sans que cela soit limitatif. Cette batterie peut être aussi une batterie de 12 Volt.

Avantageusement, la deuxième connexion électrique peut être rétablie pour une demande de couple moteur en dessous de la valeur prédéterminée CDESA sous condition que la tension de la batterie 1 descende en dessous d'une tension minimale d'activation VSA de la charge de la batterie 2. Cette tension minimale d'activation VSA est avantageusement inférieure à la tension minimale prédéterminée VMD pour effectuer la coupure de la deuxième connexion et peut être au maximum de 11,9Volt pour une batterie de voltage maximal de 24Volt. En dessous de cette tension minimale d'activation VSA, il convient de recharger la batterie.

Comme il peut être vu à la figure 2, dans un ensemble selon l'invention, ensemble qui reprend les caractéristiques précédemment mentionnées relativement à la batterie 1, l'alternateur 4, le régulateur 3 et leurs connexions électriques, cet ensemble comporte un relais 5 disposé dans la deuxième connexion électrique de la borne négative de la batterie 1 au régulateur 3. La deuxième connexion électrique est interrompue par ouverture du relais 5 et rétablie lors de la fermeture du relais 5, l'ouverture et la fermeture du relais 5 étant pilotées par un système de commande 6 conformément au procédé de contrôle précédemment détaillé.

Dans un mode de réalisation préférentielle, l'ensemble peut comporter une troisième connexion électrique reliant la borne positive de la batterie 1 au régulateur 3 en dérivation de la première connexion électrique. La troisième connexion électrique comporte un interrupteur 2 actionnable par une clé de contact du conducteur du véhicule entre une position d'ouverture et une position de fermeture de la troisième connexion. Le régulateur 3 comprend un élément APC pour « après contact » interrompant la connexion électrique entre la batterie 1 et le régulateur 3 tant que la troisième connexion est ouverte, la fermeture de l'interrupteur par la clé de contact du conducteur permettant la connexion entre la batterie 1 et le régulateur 3.

Dans un mode de réalisation préférentielle pouvant être pris ou non en combinaison avec le précédent mode, l'alternateur 4 peut comporter un volant magnétique assurant la conversion d'une énergie mécanique prélevée sur l'énergie mécanique du moteur en énergie électrique.

L'invention concerne aussi un véhicule automobile de type scooter comprenant un moteur et une unité de contrôle moteur commandant un ou des éléments pour le fonctionnement optimal du moteur, le véhicule comprenant un tel ensemble précédemment décrit. Il est préférable dans ce cas que le système de commande de l'ensemble soit intégré dans l'unité de contrôle moteur, l'unité de contrôle moteur étant reliée à divers éléments comme des capteurs ou des calculateurs lui permettant de mettre en oeuvre le procédé de contrôle selon l'invention.

Divers modes de réalisation préférentielle du procédé de contrôle selon la présente invention vont maintenant être décrits. Il sera fait référence aux figures 2 et 3 et plus particulièrement à la figure 3 qui montre un diagramme pour la mise en œuvre du procédé selon l'invention, diagramme qui n'est pas limitatif. Certaines étapes du procédé illustrées dans ce diagramme ne sont pas essentielles pour la mise en œuvre du procédé mais purement optionnelles.

A ce diagramme les sorties O et N symbolisent les réponses positives OUI ou négatives NON aux questions posées dans chaque étape de procédé illustré par un losange.

En partant d'un relais 5 fermé symbolisé par (5)=0, il est procédé au questionnement de savoir si l'alternateur 4 est en fonctionnement ou non symbolisé par (4)=1 ? Si la réponse est non N, il est retourné au début du diagramme avec un relais 5 fermé ou (5)=0.

Si la réponse est oui O, il est procédé au questionnement à savoir si le moteur tourne ce qui est symbolisé par la question : le régime moteur R est-il égal à zéro, ce qui est symbolisé par R=0 ?

Si cette dernière réponse est oui O, le relais 5 est placé dans sa position d'ouverture de la deuxième connexion, ce qui est symbolisé par (5)=1. La batterie 1 n'est alors plus alimentée électriquement par l'alternateur 4 via le régulateur 3. Comme le moteur ne tourne pas, il y a besoin d'une assistance au démarrage ASD impliquant une position d'ouverture de la deuxième connexion pour consacrer toute l'énergie mécanique du moteur pour le démarrage.

Ensuite toujours dans cette branche correspondant à oui O pour R=0 ?, soit une valeur minimale de régime prédéterminée RSD représentative d'une fin de démarrage, c'est-à-dire à partir de laquelle il est attesté que le démarrage est effectif, il est procédé au questionnement suivant : « le régime moteur R alors effectif est-il supérieur à la valeur seuil de démarrage ou valeur minimale de régime prédéterminée RSD et l'état effectif du moteur EM est-il différent de l'état de démarrage DM ou EM≠DM ? ». Cette question permet de savoir si la période de démarrage est finie. Si la réponse est oui O, le relais 5 est placé dans sa position fermée et il est ramené au départ du diagramme. Si la réponse est non N, il est retourné au début de cette branche.

Ainsi, au démarrage du moteur, la deuxième connexion électrique entre la borne négative de la batterie 1 et le régulateur 3 est interrompue jusqu'à ce que le régime moteur R atteigne une valeur minimale de régime prédéterminée ou valeur seuil de démarrage RSD représentative d'une fin de démarrage, la deuxième connexion électrique pouvant alors être rétablie si nécessaire pour la charge de la batterie 1.

En revenant à la question : « le régime moteur R est-il égal à zéro, ce qui est symbolisé par R=0 ? », si la réponse à cette question est non N, le questionnement suivant concerne le kilométrage parcouru Km par le véhicule en utilisant la même batterie 1. Si ce kilométrage parcouru est inférieur à une valeur de kilométrage maximal LKm prédéterminée, ce qui est la réponse oui O dans le diagramme, cela signifie que la batterie 1 est relativement neuve et est donc apte à bien tenir sa charge : la batterie 1 n'a donc pas besoin d'être fréquemment chargée. Sans que cela soit limitatif, la valeur de kilométrage maximal peut être de 5.000 km, notamment pour un engin à deux roues.

Si la réponse est non N, cela signifie que le relais 5 ne peut pas être ouvert étant donné qu'il y a un risque que la batterie 1 se décharge rapidement et ne tienne pas sa charge. La batterie 1 a donc besoin d'être chargée fréquemment et la deuxième connexion ne peut donc pas être trop souvent interrompue. Il est donc retourné au départ du diagramme avec un relais fermé ou (5)=0.

Ce questionnement kilométrique peut représenter la deuxième condition pour effectuer ou non l'interruption de la deuxième connexion électrique entre la borne négative de la batterie 1 et le régulateur 3.

Ensuite, dans le cas d'une réponse positive 0 au précédent questionnement, il est procédé au questionnement pour savoir si la température effective du moteur TM a atteint une température prédéterminée TA de seuil d'activation minimale. Ceci vaut pour un moteur, notamment un moteur thermique mais pas uniquement, qui est équipé d'un ou d'éléments devant être chauffés par la batterie 1 et donc devant atteindre une température minimale pour leur activation qui correspond à la température TA. Par exemple la température prédéterminée TA peut être aux environs de 35°C, sans que cela soit limitatif.

Tant que la température du moteur TM n'a pas atteint une température d'activation minimale spécifique TA pour l'élément ou la plus haute température de fonctionnement TA parmi les éléments, la batterie 1 doit encore assurer le chauffage de l'élément ou de ces éléments et son chargement doit donc être effectué. Dans ce cas, symbolisé par la réponse non N à ce questionnement il est retourné en début de diagramme avec un relais fermé ou (5)=0.

Ceci peut représenter une troisième condition pour l'interruption de la deuxième connexion électrique entre la borne négative de la batterie 1 et le régulateur 3.

Si la réponse à ce questionnement est oui O, c'est-à-dire si la température effective du moteur TM a atteint une température prédéterminée TA de seuil d'activation minimale, il est procédé au questionnement pour savoir si la tension effective VB de la batterie 1 est supérieure ou non à une tension minimale prédéterminée VMD pour la désactivation de l'alimentation électrique par l'alternateur 4. Ceci représente la première condition pour la désactivation qui consiste en l'interruption de la deuxième connexion électrique entre la borne négative de la batterie 1 et le régulateur 3.

Si la réponse est non, la batterie 1 ne peut cesser d'être alimentée car dans ce cas elle ne remplirait pas correctement son rôle pour l'alimentation électrique des éléments embarqués dans le véhicule. Il est retourné à l'étape initiale du procédé avec un relais 5 fermé ou (5)=0. La batterie 1 est alimentée par l'alternateur 4 via le régulateur 3.

Si la réponse est oui O, il est alors procédé au questionnement à savoir si le nombre d'interruptions Ni est inférieure à un nombre maximal d'interruptions Nmax. Si c'est le cas avec une réponse oui O, il n'est pas exclu de procéder à une nouvelle interruption de la deuxième connexion.

Si le nombre d'interruptions Ni est supérieure à un nombre maximal d'interruptions Nmax, ce qui est symbolisé par la sortie N, cela signifie que la batterie 1 est restée souvent sans être chargée et qu'il peut y avoir un effet mémoire de la batterie induisant une perte de charge de la batterie. Cet effet peut être compensé en rechargeant la batterie 1 périodiquement et en maintenant la batterie 1 à une tension prédéterminée suffisamment haute, par exemple la tension à mi-charge de la batterie 1. Nmax peut par exemple être de 1.000 sans que cela soit limitatif.

Ceci représente la quatrième condition pour l'interruption de la deuxième connexion électrique entre la borne négative de la batterie 1 et le régulateur 3 qui est que le nombre d'interruptions Ni ne dépasse pas un nombre d'interruptions maximal Nmax.

Ainsi, la deuxième connexion électrique entre la borne négative de la batterie 1 et le régulateur 3 peut être rétablie à une périodicité prédéterminée jusqu'à ce que la tension effective VB de la batterie atteigne une tension prédéterminée suffisamment haute VFAM pour éviter un effet mémoire diminuant la capacité de la batterie 1. Cette tension est déterminée selon le type de batterie et peut être par exemple vers la tension à mi-charge de la batterie 1. La tension prédéterminée suffisamment haute VFAM peut être aux environs de 14Volts pour une batterie de voltage maximal de 24Volts.

A la figure 3, si le nombre d'interruptions Ni est supérieure à un nombre maximal d'interruptions Nmax, ce qui est symbolisé par la sortie N du dernier questionnement, il est procédé à la question suivante : « la tension effective VB de la batterie est-elle supérieure à la tension prédéterminée suffisamment haute VFAM pour éviter un effet mémoire ? ».

Si la réponse à cette question est oui O, l'effet mémoire subi par la batterie est faible et il n'est pas nécessaire de mettre en pratique une stratégie anti-mémoire FAM par rechargement périodique de la batterie, ce qui se traduit par la désactivation de la fonction anti-mémoire soit FAM=0 et la remise à zéro du nombre d'interruptions Ni. Il est retourné en début de diagramme avec un relais fermé ou (5)=0 et un nombre d'interruptions réactualisé.

Si la réponse à cette question est non N, la stratégie anti-mémoire FAM est maintenue active soit FAM=1. Cette stratégie anti-mémoire FAM est maintenue tant que la tension effective VB de la batterie est inférieure à la tension prédéterminée suffisamment haute VFAM pour éviter un effet mémoire.

En revenant à la question : « le nombre d'interruptions Ni est-il inférieure à un nombre maximal d'interruptions Nmax? », si la réponse à cette question est oui O, il est procédé au questionnement concernant le couple moteur. Dans l'exemple de la figure 3, le moteur est un moteur thermique ce qui n'est pas obligatoire. Dans ce cas, le moteur thermique est un moteur thermique avec au moins une chambre de combustion, le moteur présentant à son entrée une vanne papillon permettant de réguler le flux de carburant injecté dans ladite au moins une chambre de combustion.

Dans ce cas du moteur thermique, la demande effective de couple moteur CM et la valeur prédéterminée de couple CDESA sont calculées en fonction du régime moteur R et de l'ouverture AP de la vanne papillon respectivement en vigueur pour cette demande ou valeur.

Dans le cas d'un moteur électrique, la demande effective de couple moteur CM et la valeur prédéterminée de couple CDESA sont calculées en fonction du régime moteur R et de l'intensité du courant d'alimentation du moteur respectivement en vigueur pour cette demande ou valeur.

Il est alors procédé au questionnement pour savoir si la demande effective de couple moteur CM est au-dessus d'une valeur prédéterminée de couple CDESA. Si c'est le cas, comme montré par la sortie oui O, il convient d'interrompre la deuxième connexion en positionnant le relais 5 dans sa position d'ouverture. Si ce n'est pas le cas, comme montré par la sortie non N, la deuxième connexion peut être maintenue fermée pour l'alimentation de la batterie 1.

A la sortie oui O de ce questionnement, comme toutes les conditions d'interruption de la deuxième connexion sont remplies, il est procédé à l'interruption de la deuxième connexion par ouverture du relais 5 et le nombre d'interruption Ni passe à Ni+1.

Le procédé selon la présente invention comprend l'étape inverse de positionnement en fermeture du relais 5. Ceci se passe quand la demande effective de couple moteur CM passe en dessous de la valeur prédéterminée de couple CDESA.

Ensuite la tension effective VB de la batterie 1 est comparée à une tension minimale d'activation VSA de la charge de la batterie. En dessous de cette tension minimale d'activation VSA, il est considéré que la batterie 1 ne peut remplir correctement son rôle et doit être rechargée. Dans ce cas, il est procédé à la fermeture impérative de la deuxième connexion pour le rechargement de la batterie 1 par l'alternateur 4 via le régulateur 3 avec retour à l'étape initiale pour laquelle le relais 5 est fermé ou (5)=0. Si ce n'est pas le cas, l'ouverture du relais 5 peut être maintenue.

Il va être détaillé sommairement ci-après différentes phases de vie du véhicule avec une implication spécifique du procédé de contrôle selon la présente invention.

La première phase de vie concerne l'assistance au démarrage du moteur du véhicule. Au passage de l'après contact APC dans la position activée, le système de commande 6 de l'ensemble, avantageusement l'unité de contrôle moteur, pilote le relais 5 afin de déconnecter la liaison entre le régulateur 3 et la batterie 1 par l'interruption de la deuxième connexion. Lors du démarrage du moteur, le couple prélevé par l'alternateur 4 sur le moteur est donc bien moindre, ce qui facilite le démarrage. Dès que le régime moteur est suffisamment établi, le système de commande 6 ouvre le relais 5, afin que la connexion électrique entre le régulateur 3 et la batterie 1 soit de nouveau effective.

La deuxième phase de vie concerne le délestage de l'alternateur 4 et, le cas échéant, de son volant magnétique sur les fortes charges du moteur et l'amélioration des performances. Sous condition que le niveau de tension de la batterie 1 le permette, le système de commande 6 pilote le relais 5 afin de déconnecter la liaison entre le régulateur 3 et la batterie 1 par ouverture de la deuxième connexion. En fonction de la charge du moteur, cela permet d'optimiser la performance du moteur.

La troisième phase de vie concerne le lestage de l'alternateur 4 pour le chargement de la batterie 1 sur les décélérations ou freinages. Afin de profiter de l'énergie disponible lors des décélérations ou freinages, le système de commande 6 de l'ensemble, avantageusement l'unité de contrôle moteur, ferme systématiquement le relais 5 afin que la deuxième connexion entre le régulateur 3 et la batterie 1 soit de nouveau fermée et effective pour procéder ainsi à la recharge de la batterie 1.

Un des principaux avantages obtenus par la présente invention est l'amélioration des performances du moteur pour le conducteur en consacrant tout le couple moteur à la propulsion du véhicule. Un autre avantage principal est la réduction de la consommation du moteur en régulant le couple prélevé par le régulateur pour la charge de la batterie. Enfin, indirectement, il est obtenu une réduction de la pollution, de la nuisance sonore et de la surchauffe du moteur.

L'invention n'est nullement limitée aux modes de réalisation décrits et illustrés qui n'ont été donnés qu'à titre d'exemples.

## Revendications

1. Procédé de contrôle d'un ensemble d'une batterie (1), d'un alternateur (4) et de leurs connexions électriques pour un moteur de véhicule automobile de type scooter, la batterie (1) comportant deux bornes, l'une positive et l'autre négative, et l'alternateur (4) prélevant une énergie mécanique lors de la rotation du moteur en la transformant en une énergie électrique alimentant un régulateur (3) de courant disposé entre la batterie (1) et l'alternateur (4) en présentant, d'un côté, une première et une deuxième connexions électriques respectivement à la borne positive et à la borne négative de la batterie (1) et, de l'autre côté, des connexions électriques avec l'alternateur (4), la batterie (1) présentant un niveau de charge et étant rechargée électriquement par l'alternateur (4) via le régulateur (3), **caractérisé en ce que** la deuxième connexion électrique entre la borne négative de la batterie (1) et le régulateur (3) est interrompue lors d'une demande effective de couple moteur (CM) au-dessus d'une valeur prédéterminée de couple (CDESA) sous première condition que la tension (VB) alors effective de la batterie (1) soit supérieure à une tension minimale prédéterminée (VMD), la deuxième connexion électrique étant rétablie pour une demande de couple moteur en dessous de la valeur prédéterminée (CDESA).

2. Procédé selon la revendication précédente, dans lequel, quand le moteur est un moteur électrique, la demande effective de couple moteur (CM) et la valeur prédéterminée de couple (CDESA) sont calculées en fonction du régime moteur (R) et de l'intensité du courant d'alimentation du moteur respectivement en vigueur pour cette demande ou valeur ou quand le moteur est un moteur thermique avec au moins une chambre de combustion, le moteur présentant à son entrée une vanne papillon permettant de réguler le flux d'air admis dans ladite au moins une chambre de combustion, la demande effective de couple moteur (CM) et la valeur prédéterminée de couple (CDESA) sont calculées en fonction du régime moteur (R) et de l'ouverture (AP) de la vanne papillon respectivement en vigueur pour cette demande ou valeur.

3. Procédé selon l'une quelconque des revendications 1 ou 2, dans lequel une deuxième condition pour l'interruption de la deuxième connexion électrique entre la borne négative de la batterie (1) et le régulateur (3) est que le kilométrage parcouru (Km) par le véhicule avec la même batterie (1) soit inférieur à une valeur de kilométrage maximal (LKm) prédéterminée.

4. Procédé selon la revendication 3, dans lequel, quand le moteur est un moteur thermique équipé d'un ou d'éléments devant être chauffés par la batterie (1) tant que la température du moteur (TM) n'a pas atteint une température de fonctionnement spécifique (TA) pour l'élément ou chacun des éléments, une troisième condition pour l'interruption de la deuxième connexion électrique entre la borne négative de la batterie (1) et le régulateur (3) est que le moteur atteigne la température de fonctionnement (TA) de l'élément ou la plus haute température de fonctionnement (TA) des éléments.

5. Procédé selon la revendication 4, dans lequel une quatrième condition pour l'interruption de la deuxième connexion électrique entre la borne négative de la batterie (1) et le régulateur (3) est que le nombre d'interruptions (Ni) n'ait pas dépassé un nombre d'interruptions maximal (Nmax).

6. Procédé selon l'une quelconque des revendications précédentes, dans lequel la deuxième connexion électrique entre la borne négative de la batterie (1) et le régulateur (3) est rétablie à une périodicité prédéterminée jusqu'à ce que la tension effective (VB) de la batterie atteigne une tension prédéterminée suffisamment haute pour éviter un effet mémoire (VFAM) diminuant la capacité de la batterie (1).

7. Procédé selon l'une quelconque des revendications précédentes, dans lequel, au démarrage du moteur, la deuxième connexion électrique entre la borne négative de la batterie (1) et le régulateur (3) est interrompue jusqu'à ce que le régime moteur (R) atteigne une valeur minimale de régime prédéterminée (RSD) représentative d'une fin de démarrage, la deuxième connexion électrique étant alors rétablie pour la charge de la batterie (1).

8. Ensemble d'une batterie (1), d'un alternateur (4) et de leurs connexions électriques pour un moteur de véhicule automobile de type scooter, la batterie (1) comportant deux bornes, l'une positive et l'autre négative, et l'alternateur (4) prélevant une énergie mécanique lors de la rotation du moteur en la transformant en une énergie électrique alimentant un régulateur (3) de courant disposé entre la batterie (1) et l'alternateur (4) en présentant, d'un côté, des première et deuxième connexions électriques respectives à la borne positive et à la borne négative de la batterie (1) et, de l'autre côté, des connexions électriques avec l'alternateur (4), la batterie (1) étant rechargée électriquement par l'alternateur (4) via le régulateur (3), **caractérisé en ce qu'**il comprend un relais (5) disposé dans la deuxième connexion électrique de la borne négative de la batterie (1) au régulateur (3), cette connexion électrique étant interrompue par ouverture du relais (5) et rétablie lors de la fermeture du relais (5), l'ouverture et la fermeture du relais (5) étant pilotées par un système de commande (6) conformément à un procédé de contrôle selon l'une quelconque des revendications précédentes.

9. Ensemble selon la revendication 8, lequel comporte une troisième connexion électrique reliant la borne positive de la batterie (1) au régulateur (3) en dérivation de la première connexion électrique, la troisième connexion électrique comportant un interrupteur (2) actionnable par une clé de contact du conducteur du véhicule entre une position d'ouverture et une position de fermeture de la troisième connexion, le régulateur (3) comprenant un élément (APC) interrompant la connexion électrique entre la batterie (1) et le régulateur (3) tant que la troisième connexion est ouverte, la fermeture de l'interrupteur par la clé de contact du conducteur permettant la connexion entre la batterie (1) et le régulateur (3).

10. Véhicule automobile de type scooter comprenant un moteur et une unité de contrôle moteur commandant un ou des éléments pour le fonctionnement du moteur, **caractérisé en ce qu'**il comprend un ensemble selon l'une quelconque des revendications 8 ou 9, le système de commande (6) de l'ensemble étant l'unité de contrôle moteur.

## Patentansprüche

1. Steuerverfahren einer Baugruppe aus einer Batterie (1), einem Wechselstromgenerator (4) und ihren elektrischen Anschlüssen für einen Motor eines Kraftfahrzeugs vom Typ Scooter, wobei die Batterie (1) zwei Klemmen umfasst, eine positive und die andere negativ, und wobei der Wechselstromgenerator (4) eine mechanische Energie bei der Drehung des Motors entnimmt, indem er sie in eine elektrische Energie umwandelt, die einen Stromregler (3) versorgt, der zwischen der Batterie (1) und dem Wechselstromgenerator (4) angeordnet ist, indem er auf einer Seite eine erste und eine zweite elektrische Verbindung jeweils mit der positiven Klemme und mit der negativen Klemme der Batterie (1) aufweist und, auf der anderen Seite, elektrische Verbindungen mit dem Wechselstromgenerator (4), wobei die Batterie (1) einen Ladepegel aufweist und elektrisch von dem Wechselstromgenerator (4) über den Regler (3) aufgeladen wird, **dadurch gekennzeichnet, dass** die zweite elektrische Verbindung zwischen der negativen Klemme der Batterie (1) und dem Regler (3) bei einer effektiven Motordrehmomentanfrage (CM) oberhalb eines vorbestimmten Drehmomentwerts (CDESA) unter der ersten Bedingung unterbrochen wird, dass die Spannung (VB) der Batterie (1), die dabei effektiv ist, größer ist als eine vorbestimmte Mindestspannung (VMD), wobei die zweite elektrische Verbindung für eine Motordrehmomentanfrage unter dem vorbestimmten Schwellenwert (CDESA) wiederhergestellt wird.

2. Verfahren nach dem vorstehenden Anspruch, wobei, wenn der Motor ein Elektromotor ist, die effektive Motordrehmomentanfrage (CM) und der vorbestimmte Drehmomentwert (CDESA) in Abhängigkeit von der Motordrehzahl (R) und der Stärke des Versorgungsstroms des Motors, die jeweils für diese Anfrage oder für diesen Wert gültig sind, berechnet werden, oder, wenn der Motor ein Verbrennungsmotor mit mindestens einer Brennkammer ist, wobei der Motor an seinem Einlass ein Drosselventil aufweist, das es erlaubt, den Luftstrom zu regulieren, der in die mindestens eine Brennkammer eingelassen wird, die effektive Motordrehmomentanfrage (CM) und der vorbestimmte Drehmomentwert (CDESA) in Abhängigkeit von der Motordrehzahl (R) und der Öffnung (AP) des Drosselventils, die jeweils für diese Anfrage oder diesen Wert gültig sind, berechnet werden.

3. Verfahren nach einem der Ansprüche 1 oder 2, wobei eine zweite Bedingung für das Unterbrechen der zweiten elektrischen Verbindung zwischen der negativen Klemme der Batterie (1) und dem Regler (3) ist, dass die Kilometerzahl (Km), die das Fahrzeug mit derselben Batterie (1) zurückgelegt hat, kleiner ist als ein vorbestimmter maximaler Kilometerwert (LKm).

4. Verfahren nach Anspruch 3, wobei, wenn der Motor ein Verbrennungsmotor ist, der mit einem oder mehreren Elementen ausgestattet ist, die von der Batterie (1) geheizt werden müssen, solange die Temperatur des Motors (TM) nicht eine spezifische Betriebstemperatur (TA) für das Element oder jedes der Elemente erreicht hat, eine dritte Bedingung für das Unterbrechen der zweiten elektrischen Verbindung zwischen der negativen Klemme der Batterie (1) und dem Regler (3) ist, dass der Motor die Betriebstemperatur (TA) des Elements oder die höchste Betriebstemperatur (TA) der Elemente erreicht.

5. Verfahren nach Anspruch 4, wobei eine vierte Bedingung für das Unterbrechen der zweiten elektrischen Verbindung zwischen der negativen Klemme der Batterie (1) und dem Regler (3) ist, dass die Anzahl von Unterbrechungen (Ni) eine maximale Anzahl von Unterbrechungen (Nmax) nicht überschritten hat.

6. Verfahren nach einem der vorstehenden Ansprüche, wobei die zweite elektrische Verbindung zwischen der negativen Klemme der Batterie (1) und dem Regler (3) mit einer vorbestimmten Periodizität wiederhergestellt wird, bis die effektive Spannung (VB) der Batterie eine vorbestimmte Spannung erreicht, die ausreichend hoch ist, um einen Memory-Effekt (VFAM), der die Kapazität der Batterie (1) verringert, zu verhindern.

7. Verfahren nach einem der vorstehenden Ansprüche, wobei beim Anlassen des Motors die zweite elektrische Verbindung zwischen der negativen Klemme der Batterie (1) und dem Regler (3) unterbrochen wird, bis die Motordrehzahl (R) einen vorbestimmten Mindestdrehzahlwert (RSD) erreicht, der für ein Ende des Anlassens repräsentativ ist, wobei die zweite elektrische Verbindung für das Laden der Batterie (1) wiederhergestellt wird.

8. Baugruppe aus einer Batterie (1), einem Wechselstromgenerator (4) und ihren elektrischen Verbindungen für einen Motor eines Kraftfahrzeugs vom Typ Scooter, wobei die Batterie (1) zwei Klemmen umfasst, eine positive und die andere negativ, und der Wechselstromgenerator (4) eine mechanische Energie bei dem Drehen des Motors entnimmt, indem er sie in eine elektrische Energie umwandelt, die einen Stromregler (3) versorgt, der zwischen der Batterie (1) und dem Wechselstromgenerator (4) angeordnet ist, indem er auf einer Seite eine erste und eine zweite elektrische Verbindung jeweils mit der positiven Klemme und mit der negativen Klemme der Batterie (1) aufweist und, auf der anderen Seite, elektrische Verbindungen mit dem Wechselstromgenerator (4), wobei die Batterie (1) elektrisch von dem Wechselstromgenerator (4) über den Regler (3) geladen wird, **dadurch gekennzeichnet, dass** sie ein Relais (5) umfasst, das in der zweiten elektrischen Verbindung der negativen Klemme der Batterie (1) mit dem Regler (3) angeordnet ist, wobei diese elektrische Verbindung durch Öffnen des Relais (5) unterbrochen und bei dem Schließen des Relais (5) wiederhergestellt wird, wobei das Öffnen und das Schließen des Relais (5) von einem Steuersystem (6) gemäß einem Steuerverfahren nach einem der vorstehenden Ansprüche gesteuert werden.

9. Baugruppe nach Anspruch 8, die eine dritte elektrische Verbindung umfasst, die die positive Klemme der Batterie (1) mit dem Regler (3) in Abzweigung von der ersten elektrischen Verbindung verbindet, wobei die dritte elektrische Verbindung einen Schalter (2) umfasst, der von einem Zündschlüssel des Fahrers des Fahrzeugs zwischen einer Öffnungsposition und einer Schließposition der dritten Verbindung betätigbar ist, wobei der Regler (3) ein Element (APC) umfasst, das die elektrische Verbindung zwischen der Batterie (1) und dem Regler (3) unterbricht, sobald die dritte Verbindung geöffnet ist, wobei das Schließen des Schalters mit dem Zündschlüssel des Fahrers die Verbindung zwischen der Batterie (1) und dem Regler (3) erlaubt.

10. Kraftfahrzeug vom Typ Scooter, das einen Motor und eine Motorsteuereinheit umfasst, die eines oder mehrere Elemente für den Betrieb des Motors steuert, **dadurch gekennzeichnet, dass** es eine Baugruppe nach einem der Ansprüche 8 oder 9 umfasst, wobei das Steuersystem (6) der Baugruppe die Motorsteuereinheit ist.

## Claims

1. Method for controlling a battery (1), an alternator (4) and the electrical connections thereof for a motor vehicle engine of the scooter type, the battery (1) comprising two terminals, one positive and the other negative, and the alternator (4) drawing a mechanical energy during the rotation of the engine by transforming it into an electrical energy supplying a current regulator (3) arranged between the battery (1) and the alternator (4) by having, on the one side, a first and a second electrical connection respectively at the positive terminal and at the negative terminal of the battery (1) and, on the other side, electrical connections with the alternator (4), the battery (1) having a charge level and being electrically recharged by the alternator (4) via the regulator (3), **characterised in that** the second electrical connection between the negative terminal of the battery (1) and the regulator (3) is interrupted during an effective engine torque (CM) demand above a predetermined torque value (CDESA) under the first condition that the thus effective voltage (VB) of the battery (1) is greater than a predetermined minimum voltage (VMD), the second electrical connection being re-established for an engine torque demand below the predetermined value (CDESA).

2. Method according to the preceding claim, wherein, when the engine is an electric engine, the effective engine torque (CM) demand and the predetermined torque value (CDESA) are calculated according to the engine speed (R) and to the intensity of the current for supplying the engine respectively in force for this demand or value or when the engine is a combustion engine with at least one combustion chamber, the engine having at the inlet thereof, a butterfly valve making it possible to regulate the air flow admitted in said at least one combustion chamber, the effective engine torque (CM) demand and the predetermined torque value (CDESA) are calculated according to the engine speed (R) and the opening (AP) of the butterfly valve respectively in force for this demand or value.

3. Method according to any one of claims 1 or 2, wherein a second conditions for the interruption of the second electrical connection between the negative terminal of the battery (1) and the regulator (3) is that the mileage travelled (Km) by the vehicle with the same battery (1) is less than a predetermined maximum mileage value (LKm).

4. Method according to claim 3, wherein, when the engine is a combustion engine equipped with one or more elements needing to be heated by the battery (1) while the temperature of the engine (TM) has not reached a specific functioning temperature (TA) for the element or each of the elements, a third condition for the interruption of the second electrical connection between the negative terminal of the battery (1) and the regulator (3) is that the engine reaches the functioning temperature (TA) of the element or the highest functioning temperature (TA) of the elements.

5. Method according to claim 4, wherein a fourth condition for the interruption of the second electrical connection between the negative terminal of the battery (1) and the regulator (3) is that the number of interruptions (Ni) has not exceeded a maximum number of interruptions (Nmax).

6. Method according to any one of the preceding claims, wherein the second electrical condition between the negative terminal of the battery (1) and the regulator (3) is re-established at a predetermined periodicity up to the effective voltage (VB) of the battery reaches a sufficiently high predetermined voltage to avoid a memory effect (VFAM) decreasing the capacity of the battery (1).

7. Method according to any one of the preceding claims, wherein, at the start-up of the engine, the second electrical connection between the negative terminal of the battery (1) and the regulator (3) is interrupted until the engine speed (R) reaches a predetermined minimum speed value (RSD) representative of an end of the start-up, the second electrical connection thus being re-established for the charging of the battery (1).

8. Assembly of a battery (1), of an alternator (4) and the electrical connections thereof for a motor vehicle engine of the scooter type, the battery (1) comprising two terminals, one positive and the other negative, and the alternator (4) drawing a mechanical energy during the rotation of the engine by transforming it into an electrical energy supplying a current regulator (3) arranged between the battery (1) and the alternator (4) by having, on the one side, first and second electrical connections respectively at the positive terminal and at the negative terminal of the battery (1) and, on the other side, electrical connections with the alternator (4), the battery (1) being electrically recharged by the alternator (4) via the regulator (3), **characterised in that** it comprises a relay (5) arranged in the second electrical connection of the negative terminal of the battery (1) to the regulator (3), this electrical connection being interrupted by opening the relay (5) and re-established during the closing of the relay (5), the opening and the closing of the relay (5) being controlled by a control system (6) according to a control method according to any one of the preceding claims.

9. Assembly according to claim 8, which comprises a third electrical connection connecting the positive terminal of the battery (1) to the regulator (3) by deriving the first electrical connection, the third electrical connection comprising a switch (2) which can be actuated by a contact key of the driver of the vehicle between an opening position and a closing position of the third connection, the regulator (3) comprising an element (APC) interrupting the electrical connection between the battery (1) and the regulator (3) while the third connection is open, the closing of the switch by the contact key of the driver making it possible for the connection between the battery (1) and the regulator (3).

10. Motor vehicle of the scooter type comprising an engine control unit controlling one or more elements for the functioning of the engine, **characterised in that** it comprises an assembly according to any one of claims 8 or 9, the control system (6) of the assembly being the engine control unit.
